# EUROPÄISCHE PATENTANMELDUNG

(11) **EP 2 193 873 A2**
(43) Veröffentlichungstag der Anmeldung: **09.06.2010**
(21) Anmeldenummer: 09175996.9
(22) Anmeldetag: 13.11.2009
(51) Int. Cl.: B23K 35/02, B23K 35/28, B23K 101/14

(54) **Lötfolie auf Aluminiumbasis**

(30) Priorität: 27.11.2008 DE 102008059410
(71) Anmelder: Behr GmbH & Co. KG, 70469 Stuttgart (DE)
(72) Erfinder: Englert, Peter, 74177 Bad Friedrichshall (DE); Trautwein, Ingo, 74321 Bietigheim-Bissingen (DE); Jilg, Rüdiger, 71546 Aspach (DE); Andic, Müjdat, 71083 Herrenberg (DE)

(57) **Zusammenfassung**

Lötfolie auf Aluminiumbasis, umfassend eine erste Folie (1) auf Basis von Aluminium, wobei zumindest eine zweite Folie (2) auf Basis von Aluminium vorgesehen ist, wobei zwischen der ersten Folie (1) und der zweiten Folie (2) zumindest eine Zwischenschicht (3) angeordnet ist, die ein Flussmittel enthält.

## Beschreibung

Die Erfindung betrifft eine Lötfolie auf Aluminiumbasis nach dem Oberbegriff des Anspruchs 1. Die Erfindung betrifft zudem ein Herstellungsverfahren für eine solche Lötfolie sowie ein Verfahren zur Herstellung von Bauteilen mittels der erfindungsgemäßen Lötfolie.

Zur Verlötung von Bauteilen mit Lot auf Aluminiumbasis ist es bekannt, Bleche vollständig mit Lot in Form einer niedrig schmelzenden Aluminumlegierung, etwa AlSi, zu plattieren und die Lotplattierung dann nach einer Umformung der Bleche, gegebenenfalls auch nach einer Vormontage der zu verlötenden Bauteile, mit Flussmittel zu versehen.

Ferner ist es unter dem Begriff "Sil Flux Verfahren" bekannt, eine Mischung aus Flussmittel und Siliziumpulver auf eine Aluminiumoberfläche aufzubringen. Bei Erreichen der Löttemperatur diffundiert das Silizium in die Aluminiumoberfläche ein, wodurch das eigentliche Lot, eine niedrigschmelzende AlSi-Legierung, erst gebildet wird.

Grundsätzlich sind Ansätze diskutiert worden, Lotmaterial in Form einer metallischen Folie auf Bauteile aufzubringen. Dabei haben Probleme bezüglich Flexibilität der Folie und Aufbringung von Flussmittel eine Anwendung in der Massenfertigung von Bauteilen bisher verhindert.

Es ist die Aufgabe der Erfindung, eine Lötfolie bereitzustellen, durch die eine einfache und kostengünstige Herstellung von Bauteilen bzw. Produkten aus verlöteten Komponenten ermöglicht ist.

Diese Aufgabe wird für eine eingangs genannte Lötfolie erfindungsgemäß durch die kennzeichnenden Merkmale des Anspruchs 1 gelöst. Durch die mehrschichtige Anordnung, bei der Flussmittel in einer Zwischenschicht zwischen zwei metallischen Folien vorgesehen ist, kann die Lötfolie besonders einfach auch auf komplex geformte Komponenten aufgebracht werden, wobei das Flussmittel sicher gekapselt und gleichmäßig verteilt vorliegt. Eine ungünstige Verunreinigung von kritischen Bauteilbereichen mit Flussmittel wird vermieden. Durch den bei der Folienherstellung gut kontrollierbaren, homogenen und optimal dosierten Flussmittelauftrag werden nach dem Lötprozess vorhandene Verunreinigungen der Komponenten durch Flussmittelreste minimiert oder vollständig verhindert.

In besonders bevorzugter Ausführungsform der Erfindung enthält die Zwischenschicht neben dem Flussmittel einen Legierungsbestandteil, insbesondere Silizium, eines bei Erhitzung entstehenden Lotes. Hierdurch können die erste und/oder die zweite Folie aus einem besonders flexiblen und mechanisch geeigneten Material, zum Beispiel reinem technischem Aluminium, bestehen. Es kann sich bei den Folien zum Beispiel auch um eine AlSi-Legierung handeln, deren Si-Anteil zur Verbesserung der mechanischen Eigenschaften zunächst niedriger als für ein Lotmaterial gewünscht ist, wobei dann im Zuge der Verlötung der Anteil durch eindiffundierendes Silizium erhöht und der Schmelzpunkt entsprechend gesenkt wird. Silizium ist ein bevorzugter, bekannter und gut beherrschbarer Legierungsbestandteil, wobei die Erfindung sich grundsätzlich auch auf andere mögliche Legierungsbestandteile des Aluminiums erstreckt.

In bevorzugter Detailgestaltung, insbesondere für den Fall des Siliziums, beträgt der Massenanteil des Legierungsbestandteils zwischen etwa 12% und 30%, besonders bevorzugt zwischen etwa 18% und etwa 28%, der Zwischenschicht.

In alternativer oder ergänzender Detailgestaltung beträgt der Massenanteil des Flussmittels in der Zwischenschicht zwischen etwa 45% und etwa 85%, insbesondere zwischen etwa 60% und etwa 80%.

Zur Vereinfachung der Herstellung und Verbesserung der Eigenschaften der Zwischenschicht kann diese vorteilhaft ein organisches Bindemittel enthalten, insbesondere in einem Massenanteil zwischen etwa 3% und etwa 25%. Besonders bevorzugt unterliegt das Bindemittel bei einem Lötprozess einer Pyrolyse und umfasst insbesondere ein Polymer. Unter Pyrolyse ist dabei zu verstehen, dass das Bindemittel sich im Bereich der Löttemperatur zersetzt und/oder verflüchtigt. Durch den erfindungsgemäßen Aufbau der Lötfolie kann eine Menge an Bindemittel besonders gering gehalten werden, so dass ungünstige Einflüsse des Bindemittels auf den Lötprozess oder nachfolgend zurückbleibende Verunreinigungen vermieden werden.

Bei einer optimierten Ausführungsform der Erfindung hat zumindest eine der Folien, insbesondere jede der beiden Folien, eine Dicke von weniger als etwa 150 µm, insbesondere im Bereich zwischen etwa 3 µm und etwa 15 µm. Die geringe Foliendicke ermöglicht eine hohe mechanische Flexibilität und somit gute Applizierbarkeit der Folie auch auf komplex geformte Bauteile.

Besonders vorteilhaft hat die Zwischenschicht der Lötfolie eine Masse zwischen etwa 5 g und etwa 20 g, insbesondere zwischen etwa 10 g und etwa 12 g, pro Quadratmeter. Hierdurch ist eine ausreichende Flächendichte an Flussmittel und/oder Legierungsbestandteilen bereitgestellt und zugleich eine geringe Dicke der Zwischenschicht und eine hohe Flexibilität der gesamten Lötfolie ermöglicht.

In allgemein bevorzugter Ausführungsform besteht zumindest eine der beiden Folien aus unlegiertem Aluminium oder einer Aluminiumlegierung mit einem Siliziumanteil zwischen 0,5% und 12%.

Für ein Verfahren zur Herstellung einer Lötfolie wird die Aufgabe der Erfindung durch die Merkmale des Anspruchs 10 gelöst. Durch Dispersion von Insbesondere pulverförmigen Destandteilen der Zwischenschicht in einem Lösungsmittel ist ein einfacher und gleichmäßiger Auftrag der Zwischenschicht ermöglicht.

In bevorzugter Detailgestaltung trocknet das Lösungsmittel vor Aufbringen der zweiten Folie zumindest teilweise, insbesondere nicht vollständig, ab. Dies ermöglicht ein prozesssicheres und gleichmäßiges Aufbringen der zweiten Folie auf die Zwischenschicht.

Im Interesse einer kostengünstigen Massenfertigung wird die Zwischenschicht mittels eines Coil-Coating-Verfahrens auf die erste Folie aufgebracht. FCoil-Coating-Verfahren sind auch unter den Begriffen Bandbeschichtung oder kontinuierliche Metallbandbeschichtung bekannt.

Bei einer besonders vorteilhaften Ausführungsform des Herstellungsverfahrens erfolgt nach dem Aufbringen der zweiten Folie ein Beschneiden zu einer Form, mittels derer nur selektierte Bereiche eines Bauteils mit Lötfolie belegt werden können. Hierdurch kann die an Komponenten applizierte Menge von Lotmaterial und somit auch Flussmittel einfach und optimal reduziert werden. Unter anderem werden hierdurch Verunreinigungen, etwa durch nach dem Lötprozess verbleibendes Flussmittel, verringert und die Prozesssicherheit der Herstellung insgesamt verbessert.

Die Aufgabe der Erfindung wird für ein Verfahren zur Herstellung eines Bauteils aus zumindest zwei Komponenten erfindungsgemäß durch die Merkmale des Anspruchs 14 gelöst. Besonders bevorzugt ist das Bauteil dabei ein Wärmetauscher, insbesondere für ein Kraftfahrzeug. Wärmetauscher für Kraftfahrzeuge zeichnen sich in besonderem Maß durch große Stückzahlen und Komplexität der Komponentenformen aus und sind zugleich besonders empfindlich in Bezug auf Verunreinigungen wie etwa Flussmittelrückstände. Die Verwendung einer erfindungsgemäßen Lötfolie für den Wärmetauscherbau für Kraftfahrzeuge ist daher besonders geeignet.

Weiter Vorteile und Merkmale der Erfindung ergeben sich aus den nachfolgend beschriebenen Ausführungsbeispielen sowie aus den abhängigen Ansprüche.

Nachfolgend werden mehrere Ausführungsbeispiele der Erfindung beschrieben und anhand der anliegenden Zeichnung näher erläutert.

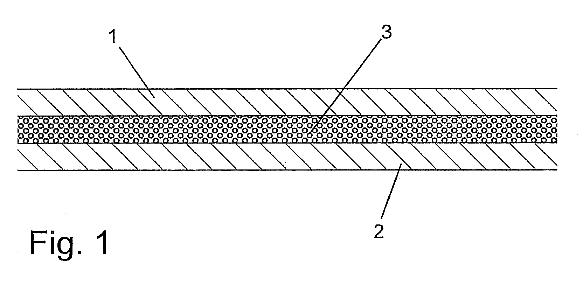

- Fig. 1: zeigt eine schematische Darstellung einer erfindungsgemäßen Lötfolie.

Eine bevorzugte erfindungsgemäße Lötfolie besteht gemäß Fig. 1 aus einer ersten Folie 1 und einer zweiten Folie 2 aus technischem Aluminium. Die Folien haben eine gleiche Dicke von jeweils zwischen 3 µm (Mikrometer) und 10 µm (Mikrometer). Zwischen den beiden Folien ist eine Zwischenschicht 3 angeordnet, auf der die Folien jeweils berührend aufliegen. Die Zwischenschicht 3 umfasst ein Gemisch aus Flussmittel, Silizium und Bindemittel in folgendem Mischungsverhältnis (jeweils Gewichts-%):

| | |
|---|---|
| Flussmittel | 45% - 85%, insbesondere 70% |
| Silizium | 12% - 30%, insbesondere 23% |
| Bindemittel | 3% - 25%, insbesondere 7%. |

Bei dem Flussmittel handelt es sich um ein für Aluminium-Lötflussmittel übliches Salzgemisch, zum Beispiel das bekannte Produkt NOCOLOK® des Unternehmens Solvay.

Bei dem Bindemittel handelt es sich um ein organisches Polymer, zum Beispiel aus der Klasse der Acrylate oder der PU-Bindemittel.

Das Silizium liegt in einer Pulverform vor, wobei die Korngrößenverteilung bevorzugt zwischen 10 µm und 120 µm, insbesondere zwischen 20 µm und 80 µm liegt.

Die Zwischenschicht hat eine Auftragsdichte von ungefähr 10 g - 12 g pro Quadratmeter, wobei je nach Kompaktheit der Schicht auch abweichende Werte zur Einstellung einer optimalen Dicke und Flexibilität möglich sind. Die Dicke der Zwischenschicht liegt dabei allenfalls in der Größenordnung der Dicken der beiden Folien (1, 2).

Die vorstehend beschriebene Lötfolie funktioniert so, dass im Zuge des Aufheizens, etwa in einem Lötofen, das Silizium aus der Zwischenschicht in die dünnen Aluminiumfolien eindiffundiert und hierdurch ein niedrigschmelzendes Lot auf AlSi-Basis ausbildet. Im Zuge des Aufschmelzens der Folie kann das freigesetzte Flussmittel seine aus der Praxis bekannte Wirkung an den Lötstellen entfalten. Das organische Bindemittel, das nur zu einem relativ kleinen Anteil in der Zwischenschicht enthalten ist, pyrolisiert dabei rechtzeitig und hat daher keine negativen Auswirkungen auf den Lötprozess. Nach dem Aufschmelzen der Folie besteht daher im wesentlichen der gleiche Zustand an den Lötstellen der zu verlötenden Komponenten, wie er etwa im Fall von mit AlSi plattierten Werkstückblechen, die umgeformt und vor der Verlötung nachfolgend mit NOCOLOK® besprüht wurden, vorliegt.

Nachfolgend wird ein mögliches Herstellungsverfahren der Lötfolie beschrieben:

Die erste Aluminiumfolie wird nach einem Coil-Coating Verfahren von einer Rolle zugeführt und quasi-endlos mit der Zwischenschicht beschichtet. Hierzu kann die erste Aluminiumfolie auf eine definierte Temperatur erhitzt werden, etwa im Bereich 40 °C - 100 °C, insbesondere 50 °C - 80 °C.

Die Zwischenschicht wird als wässrige Suspension auf die erste Folie aufgesprüht. Hierzu wird zunächst das Siliziumpulver mit dem pulverförmigen NOCOLOK®-Flussmittel vermischt und in einem Lösungsmittel, zum Beispiel Wasser, dispergiert. Nachfolgend wird eine Lösung des organischen Bindemittels hinzugegeben und mit weiterem Lösungsmittel die Viskosität der Dispersion zum Auftrag eingestellt. Zur Verbesserung des Ergebnisses kann vor dem Auftrag auf die erste Folie noch eine Siebung erfolgen.

Nach Auftrag auf die erste Folie 1 wird durch Prozessparameter wie etwa Folientemperatur und Wartezeit eine definierte Trocknung der Zwischenschicht erreicht.

Nachfolgend wird die zweite Folie 2 auf die Zwischenschicht aufgebracht, bevorzugt ebenfalls in einem Endlos-Verfahren von einer Vorratsrolle.

Dabei ist es nicht notwendig, aber bevorzugt vorgesehen, dass die Zwischenschicht vor der nachfolgenden Kaschierung der zweiten Folie 2 eine definierte Restfeuchte aufweist, wodurch eine verbesserte und gleichmäßige Anlage der zweiten Folie an der Zwischenschicht erreicht wird.

Die resultierende Lötfolie kann dann auf Komponenten zum Zweck derer Verlötung aufgelegt bzw. aufkaschiert werden.

Bevorzugt wird hierzu die Folie zunächst in eine definierte Form geschnitten, so dass nur die Bereiche der Lötstellen von der Folie belegt sind. Dies kann insbesondere bei großflächigen Komponenten wie zum Beispiel den Scheiben eines Stapelscheiben-Wärmetauschers eine erhebliche Einsparung an Lot und Flussmittel bedeuten.

Eine bevorzugte Anwendung bzw. Verwendung der erfindungsgemäßen Lötfolie betrifft die Serienfertigung von Wärmetauschern, zum Beispiel für Kraftfahrzeuge. Beispiele hierfür sind Kühlmittelkühler, Ölkühler, Klimaverdampfer und Gaskühler, Abgaskühler, Ladeluftkühler u.a.. Solche Wärmetauscher bestehen zumeist aus zu verlötenden Aluminiumkomponenten, die zumeist nach einer mechanischen Vormontage in einen Lötofen verbracht werden.

Die Lötfolie kann dabei zum Beispiel auf zu verlötende Bereiche von Scheiben eines Stapelscheibentauschers oder auf Tauscherrohre im Bereich von Verlötungen mit einem Boden aufgebracht werden.

Bei einer Alternativen Ausführungsform der erfindungsgemäßen Lötfolie bestehen die erste Folie 1 und/oder die zweite Folie 2 nicht aus reinem Aluminium, sondern einer Aluminiumlegierung. Grundsätzlich kann dies bereits die Lotlegierung sein, so dass auf einen Legierungsbestandteil wie etwa Silizium in der Zwischenschicht je nach Anforderungen ganz verzichtet werden kann. Es kann aber auch aus mechanischen Gründen oder aus Gründen der Kontrolle des Lötprozesses ein erniedrigter Siliziumanteil in den Folien 1, 2 vorhanden sein, der durch zusätzliches Silizium aus der Zwischenschicht im Zuge des Lötvorgangs durch Eindiffusion erhöht wird.

## Patentansprüche

1. Lötfolie auf Aluminiumbasis, umfassend
eine erste Folie (1) auf Basis von Aluminium,
**dadurch gekennzeichnet,**
**dass** zumindest eine zweite Folie (2) auf Basis von Aluminium vorgesehen ist,
wobei zwischen der ersten Folie (1) und der zweiten Folie (2) zumindest eine Zwischenschicht (3) angeordnet ist, die ein Flussmittel enthält.

2. Lötfolie nach Anspruch 1, **dadurch gekennzeichnet, dass** die Zwischenschicht (3) neben dem Flussmittel einen Legierungsbestandteil, insbesondere Silizium, eines bei Erhitzung entstehenden Lotes enthält.

3. Lötfolie nach Anspruch 2, **dadurch gekennzeichnet, dass** der Legierungsbestandteil im Massenanteil zwischen etwa 12% und 30%, insbesondere zwischen etwa 18% und etwa 28%, der Zwischenschicht (3) beträgt.

4. Lötfolie nach Anspruch 2 oder 3, **dadurch gekennzeichnet, dass** das Flussmittel im Massenanteil zwischen etwa 45% und etwa 85%, insbesondere zwischen etwa 60% und etwa 80%, der Zwischenschicht (3) beträgt.

5. Lötfolie nach einem der vorhergehenden Ansprüche, **dadurch gekennzeichnet, dass** die Zwischenschicht (3) ein organisches Bindemittel, insbesondere in einem Massenanteil zwischen etwa 3% und etwa 25%, enthält.

6. Lötfolie nach Anspruch 5, **dadurch gekennzeichnet, dass** das Bindemittel bei einem Lötprozess einer Pyrolyse unterliegt und insbesondere ein Polymer umfasst.

7. Lötfolie nach einem der vorhergehenden Ansprüche, **dadurch gekennzeichnet, dass** zumindest eine der Folien (1, 2), insbesondere jede der beiden Folien (1, 2), eine Dicke von nicht mehr als etwa 150 µm, insbesondere im Bereich zwischen etwa 3 µm und etwa 15 µm, aufweist.

8. Lötfolie nach einem der vorhergehenden Ansprüche, **dadurch gekennzeichnet, dass** die Zwischenschicht (3) eine Masse zwischen etwa 5g und etwa 20g, insbesondere zwischen etwa 10g und etwa 12g, pro Quadratmeter aufweist.

9. Lötfolie nach einem der vorhergehenden Ansprüche, **dadurch gekennzeichnet, dass** zumindest eine der beiden Folien (1, 2) aus unlegiertem Aluminium oder einer Aluminiumlegierung mit einem Siliziumanteil zwischen 0,5% und 12% besteht.

10. Verfahren zur Herstellung einer Lötfolie nach einem der vorhergehenden Ansprüche, umfassend die Schritte:
- Zuführen der ersten Folie (1),
- Aufbringen einer Dispersion aus zumindest dem Flussmittel und einem Lösungsmittel auf die erste Folie zur Ausbildung der Zwischenschicht (3),
- Aufbringen der zweiten Folie (2) auf die Zwischenschicht (3).

11. Verfahren nach Anspruch 10, **dadurch gekennzeichnet, dass** das Lösungsmittel vor Aufbringen der zweiten Folie (2) zumindest teilweise, insbesondere nicht vollständig, abtrocknet.

12. Verfahren nach Anspruch 10 oder 11, **dadurch gekennzeichnet, dass** die Zwischenschicht (3) mittels eines Coil-Coating-Verfahrens auf die erste Folie (1) aufgebracht wird.

13. Verfahren nach einem der Ansprüche 10 bis 12, **dadurch gekennzeichnet, dass** nach dem Aufbringen der zweiten Folie (2) ein Beschneiden zu einer Form erfolgt, mittels derer nur selektierte Bereiche eines Bauteils mit Lötfolie belegt werden.

14. Verfahren zur Herstellung eines Bauteils aus zumindest zwei Komponenten, umfassend die Schritte
- Aufbringen einer Lötfolie nach einem der Ansprüche 1 bis 9 auf zumindest eine der Komponenten,
- Verlöten der Komponenten miteinander durch Erhitzen und Aufschmelzen der Lötfolie.

15. Verfahren nach Anspruch 14, **dadurch gekennzeichnet, dass** das Bauteil ein Wärmetauscher, insbesondere für ein Kraftfahrzeug, ist.
